Europäisches Patentamt

European Patent Office

Office européen des brevets

(19)

(11) Veröffentlichungsnummer: **0 111 168**
**B1**

(12) **EUROPÄISCHE PATENTSCHRIFT**

(45) Veröffentlichungstag der Patentschrift:
**17.09.86**

(21) Anmeldenummer: **83111189.3**

(22) Anmeldetag: **09.11.83**

(51) Int. Cl.⁴: **H 04 B 3/46,** H 04 B 17/02,
G 01 R 31/08

(54) **Schaltungsanordnung zur Fehlerortung in Verbindung mit einer Einrichtung zur Fernspeisung von elektrischen Verbrauchern.**

(30) Priorität: **12.11.82 DE 3242000**

(43) Veröffentlichungstag der Anmeldung:
**20.06.84 Patentblatt 84/25**

(45) Bekanntmachung des Hinweises auf die Patenterteilung:
**17.09.86 Patentblatt 86/38**

(84) Benannte Vertragsstaaten:
**AT BE CH DE FR GB IT LI NL SE**

(56) Entgegenhaltungen:
**DE - A - 3 111 107**
**DE - A - 3 216 497**
**DE - B - 1 154 525**
**DE - B - 1 155 172**
**DE - B - 1 157 663**
**DE - B - 1 902 090**
**DE - B - 2 620 348**
**US - A - 4 055 733**
**US - A - 4 055 733**

(73) Patentinhaber: **Siemens Aktiengesellschaft Berlin und München, Wittelsbacherplatz 2, D-8000 München 2 (DE)**

(72) Erfinder: **Ziegler, Alfred, Dipl.-Ing., Laimer Platz 1, D-8000 München 21 (DE)**

## Beschreibung

Die Erfindung bezieht sich auf eine wie im Oberbegriff des Patentanspruches 1 angegebene Schaltungsanordnung. Eine derartige Schaltungsanordnung ist bereits aus der DE-B-1 155 172 bekannt. Bei der bekannten Schaltungsanordnung ist in jeder Zwischenstelle ein Widerstand in Reihe mit einer zur Fernspeisespannung umgekehrt gepolten Diode zwischen die beiden Fernspeisestrompfade geschaltet. Im Fehlerfall wird in der Speisestelle mit einer Spannung mit zur Fernspeisesspannung umgekehrter Polung der Eingangswiderstand des verbleibenden Streckenteiles gemessen. Aus dem Strom lässt sich auf die Lage des unterbrochenen Feldes schliessen.

Am Ort der Speisestelle ist keine Serienschaltung aus einem Widerstand und einer zur Fernspeisespannung umgekehrt gepolten Diode zwischen die beiden Fernspeisestrompfade geschaltet. Der in der Speisestelle vorgesehene Stromdiskriminator ist durch ein Amperemeter gebildet.

Anstelle von Messwiderständen können in den Zwischenstellen auch Konstantstrom-Dioden vorgesehen sein (DE-B-2 620 348).

Die parallel zu den Verbrauchern liegenden Dioden können durch eine oder mehrere in Serie geschaltete Diodenstrecken oder durch Z-Dioden gebildet sein und gegebenenfalls zur Begrenzung oder Stabilisierung der Verbraucherspannung dienen.

Für den Fall, dass die Verbraucher durch die parallelgeschaltete Diode nicht ausreichend gegen Speisespannungen der falschen Polarität geschützt sind, können zusätzlich in Serie zu den Verbrauchern Dioden angebracht werden, die für den Fernspeisestrom in Durchlassrichtung gepolt sind. Eine derartige Anordnung geht z.B. aus der DE-AS-1 157 663 hervor.

Ferner ist z.B. aus der DE-AS 1 902 090 bekannt, bei der Fernspeisung von elektrischen Verbrauchern Vorrichtungen zum selbsttätigen Schliessen der Fernspeiseschleife vor einer Unterbrechungsstelle, insbesondere sogenannte Schaltzusätze, zu verwenden. Derartige Vorrichtungen schliessen die Fernspeiseschleife über einen Querzweig, solange im weiterführenden Teil der Fernspeiseschleife kein Strom vorgegebener Grösse gemessen wird. Auf diese Weise wird bei der Inbetriebnahme der Fernspeisung ein Abschnitt der Fernspeisestrecke nach dem anderen geprüft und gegebenenfalls aufgeschaltet. Dabei lässt sich ohne weiteres vermeiden, dass die Fernspeisung in Betrieb genommen wird, wenn an einer Unterbrechungsstelle ein Widerstand anliegt, der einen vorgegebenen, dem Körperwiderstand des Menschen entsprechenden Widerstandswert erreicht oder gar überschreitet.

Eine weitere Ausführungsform einer Vorrichtung zum Schliessen einer Fernspeiseschleife vor einer Unterbrechungsstelle geht aus der DE-AS 1 154 525 hervor.

Andererseits kann man eine Einrichtung zur Fernspeisung von elektrischen Verbrauchern mittels Gleichstrom-Reihenspeisung z.B. im Hinblick auf einen begrenzten Einbauraum ohne solche Schaltzusätze aufbauen. Bei der Inbetriebnahme von derartigen Fernspeisestrecken muss das Fernspeisegerät in der speisenden Stelle auf den Schleifenwiderstand der kompletten Strecke den Fernspeisestrom aufschalten. Hierbei ist aber aus Personenschutzgründen zu vermeiden, dass eine Aufschaltung auch dann erfolgt, wenn an einer Unterbrechungsstelle der Fernspeisekreis durch Berührung über den Körperwiderstand des Menschen geschlossen ist.

Solange der Fernspeisestrom so niedrig ist, dass er einen bei Berührung zulässigen Wert nicht überschreitet, z.B. 40 mA, kann die Aufschaltung ohne zusätzliche Massnahmen vorgenommen werden.

Bei hohen Fernspeiseströmen wird jedoch vor der Inbetriebnahme zweckmässigerweise überprüft, ob die Speiseschleife vollständig geschlossen ist und nicht etwa an einer Unterbrechungsstelle durch Berührung überbrückt ist. Hierbei besteht die Schwierigkeit, dass der Schleifenwiderstnd einer vollständigen Fernspeisestrecke, insbesondere bei niedrigen Prüfspannungen oder -strömungen, weit höhere Werte aufweist als der Körperwiderstand, der z.B. mit 2000 $\Omega$ angenommen werden kann. Es können sich somit Schwierigkeiten dadurch ergeben, dass bei Prüfung der gesamten Fernspeiseschleife eine intakte Schleife nicht mit ausreichender Sicherheit von einer Fernspeiseschleife unterschieden werden kann, bei der eine Unterbrechungsstelle durch einen Körperwiderstand überbrückt ist. Von besonderem Nachteil kann dabei sein, dass mit Rücksicht auf die gewünschte Prüfung die Reichweite der Fernspeisung und der spezifische Widerstand der Fernspeisestrompfade begrenzt sind.

Es wurde bereits ein Verfahren zur Inbetriebnahme der Fernspeisung von elektrischen Verbrauchern vorgeschlagen (EP-A-0097233 mit dem Publikationsdatum 4.1.84), das eine, insbesondere selbsttätige, ungefährliche Inbetriebnahme einer Fernspeisestrecke ohne Vorrichtungen zum selbsttätigen Schliessen der Fernspeiseschleife vor einer Unterbrechungsstelle unabhängig vom Widerstand der Verbraucher dadurch gewährleistet, dass zunächst ein Widerstand der Fernspeiseschleife geprüft und der Fernspeisestrom erst eingeschaltet wird, sobald in der Speisestelle ein unter einem vorgegebenen Betrag liegender Wert des Widerstandes der Fernspeiseschleife festgestellt wird, und dass die Prüfung des Widerstandes der Fernspeiseschleife derart vorgenommen wird, dass der dabei fliessende Strom bezogen auf den Fernspeisestrom entgegengesetzt gerichtet ist.

Bei einer Ausführungsform einer zur Durchführung des Verfahrens vorgeschlagenen Schaltungsanordnung ist in der Speisestelle ein Messinstrument vorgesehen, mit dessen Hilfe der Fernspeisestrom und der Prüfstrom gemessen werden können.

Ferner ist aus der DE-A-3 111 107 bereits eine Schaltungsanordnung zur Messwertübertragung von Gleichspannungen bekannt, bei der als Potentialtrennvorrichtungen Optokoppler vorgesehen sind.

Aufgabe der Erfindung ist es, die Schaltungsanordnung der eingangs genannten Art derart auszubilden, dass sich das Ergebnis der Fehlerortung in einer besonders leicht auszuwertenden Weise ausgeben lässt. Insbesondere soll das Ergebnis in einfacher und übersichtlicher Weise angezeigt und/oder mit Hilfe üblicher Fernüberwachungseinrichtungen übertragbar sein.

Aus der US-A-4055733 ist bereits eine Schaltungsanordnung mit Fensterdiskriminatoren bekannt, an die jeweils ein Anzeigeelement angeschlossen ist. Mit dieser Schaltungsanordnung soll der Pegel von Analogsignalen gemessen und angezeigt werden.

Wie Überlegungen im Rahmen der Erfindung zeigten, lässt sich in einer Schaltungsanordnung der eingangs genannten Art das zur Fehlerortung verwendete Amperemeter nicht ohne weiteres durch eine Anordnung mit Fensterdiskriminatoren ersetzen, wenn für jeden Fernspeiseabschnitt ein Anzeigeelement vorgesehen werden soll.

Gemäss der Erfindung wird die Schaltungsanordnung zur Lösung der gestellten Aufgabe in der im kennzeichnenden Teil des Patentanspruches 1 angegebenen Weise ausgebildet. Durch diese Massnahmen ergibt sich, dass im Fehlerfall jeweils der dem fehlerhaften Feld des Fernspeisekreises zugeordnete Diskriminator anspricht, so dass sich eine besonders leicht an unterschiedliche Einsatzfälle anpassbare und dabei übersichtliche Ausgabe des Fehlerortes ergibt, wobei für jeden Fernspeiseabschnitt ein Anzeigeelement vorgesehen werden kann.

Besonders vorteilhaft ist eine Verwendung der Schaltungsanordnung in Verbindung mit einem Verfahren zur ungefährlichen Inbetriebnahme der Fernspeisung, wobei zunächst ein Widerstand der Fernspeiseschleife geprüft und der Fernspeisestrom erst eingeschaltet wird, sobald in der Speisestelle ein unter einem vorgegebenen Betrag liegender Wert des Widerstandes der Fernspeiseschleife festgestellt wird. In diesem Fall lassen sich die in der Speisestelle erforderlichen Mittel zur Einspeisung eines Prüfstromes in den Fernspeisekreis mehrfach ausnutzen.

Ein derartiges Verfahren lässt sich in Verbindung mit den zur Fehlerortung dienenden Querzweigen in vorteilhafter Weise auch bei Fernspeiseschleifen anwenden, deren Widerstand bei der Prüfung bereits im Bereich des Körperwiderstandes liegt, da bei der Fehlerortung der Leitwert der parallelliegenden Messwiderstände den Eingangswiderstand der Fernspeiseschleife weiter herabsetzt. Es ist dann vorteilhaft, den Wert der in den Querzweigen liegenden Messwiderstände, soweit es die Messgenauigkeit der Fehlerortung zulässt, so niedrig zu wählen, dass ein möglichst geringer Wert für den Eingangswiderstand der Speiseschleife erreicht wird. Damit kann auch in Fällen, in denen der Kupferwiderstand allein schon etwa die Grösse des Körperwiderstandes erreicht, noch ein ausreichender Unterschied zwischen Strecken-Eingangswiderstand und Körperwiderstand erzielt werden.

Diese Prüfung der Strecke vor Inbetriebnahme und die Ortungsmessung erfolgen auf nahezu gleiche Weise, insbesondere bei Verwenden der gleichen Prüfspannung. Dieser Umstand ermöglicht auch eine Automatisierung des Prüf- und des Ortungsvorganges mit nur geringem Aufwand.

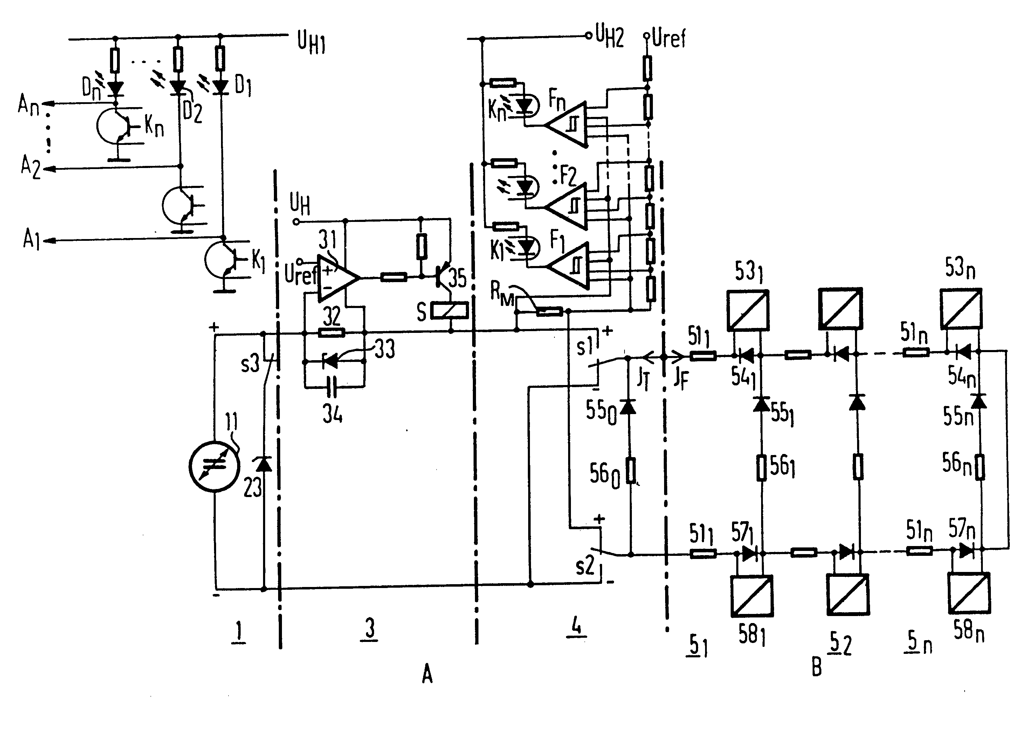

Die Erfindung wird anhand des in der Figur dargestellten Ausführungsbeispieles näher erläutert.

Die Figur zeigt eine Schaltungsanordnung zur automatischen ungefährlichen Inbetriebnahme einer Fernspeisestrecke ohne Schaltzusätze mit selbsttätiger Fehlerortung durch Leitwertmessung bei Streckenunterbrechung.

Die Fernspeiseschleife B dient zur Fernspeisung von Zwischenverstärkern einer Vierdraht-Nachrichtenübertragungsstrecke, die in der Figur nicht näher dargestellt sind. Die Fernspeiseschleife wird nur von einer Seite her gespeist und weist daher an dem der Speisestelle abgewandten Ende eine direkte Verbindung der beiden Adern bzw. Fernspeisestrompfade auf.

In jedem Fernspeisestrompfad sind die Speisespannungseingänge der Gleichstromumrichter $53_1...53_n$ bzw. $58_1...58_n$ der zu einer Übertragungsrichtung gehörenden Verstärker eingeschleift. Die Gleichstromumrichter werden über eine eigene Fernspeiseleitung oder z.B. jeweils über den Kabelinnenleiter in Verbindung mit Fernspeiseweichen gespeist. Gegebenenfalls können anstelle der Umrichter die Versorgungsspannungseingänge der Verstärker selbst oder andere ferngespeiste Verbraucher, z.B. Fernwirkeinrichtungen oder dergleichen, im Fernspeisekreis eingefügt sein. Gegebenenfalls kann je Zwischenstelle nur ein einziger Verbraucher vorhanden sein. Die Kabelwiderstände der Speiseabschnitte bzw. Verstärkerfelder sind mit $51_1...51_n$ bezeichnet. Die Verbraucher sind durch Dioden $54_1...54_n$ bzw. $57_21...57_n$ überbrückt. Diese Dioden sind derart gepolt, dass sie für den Fernspeisestrom gesperrt sind.

Von der Speisestelle A aus gesehen, befindet sich am Ende jedes Speiseabschnittes bzw. nach jeder die Verbraucher enthaltenden Zwischenstelle ein Querzweig, der aus einem ohmschen Widerstand $56_1...56_n$ und einer dazu in Serie geschalteten Diode $55_1...55_n$ besteht. An dem der Speisestelle A abgewandten Ende ist die Fernspeiseschleife B angeschlossen.

Die Dioden $55_1...55_n$ sind für den Fernspeisestrom in Sperrichtung gepolt. Die in den Querzweigen befindlichen Widerstände $56_1...56_n$ dienen zur Fehlerortung durch Leiterwertmessung.

Die Speisestelle A enthält die Speisevorrichtung 1, die eine Konstantstromquelle 11 aufweist. Parallel zur Stromquelle 11 liegt ein Stromzweig, der aus dem Ruhekontakt S3 eines Relais S und einer Z-Diode 23 besteht. Übersteigt bei nicht erregtem Relais S die Ausgangsspannung der Stromquelle 11 die Zenerspannung der Z-Diode 23, so wird die Ausgangsspannung der Speisevorrichtung 1 auf z.B. 60 V begrenzt. Dies kann auch durch andere bekannte Spannungsbegrenzerschaltungen erreicht werden.

In Serie zur Stromquelle 11 liegt im Hauptstromkreis ein Widerstand 32. An den als Strommesswiderstand dienenden Widerstand 32 ist ein Schwellwertschalter 31 angeschlossen, der den Spannungsabfall am Widerstand 32 mit der Referenzspannung $U_{ref}$ vergleicht. Überschreitet der Prüfstrom $I_T$ einen vorgegebenen Wert, so wird über einen Transistor 35 das Relais S erregt.

Der Schwellwertschalter 31 ist durch eine Parallelschaltung aus Z-Diode 33 und Kondensator 34 gegen Überspannungen geschützt. Der Kondensator 34 verhindert ein Ansprechen des Schwellwertschalters durch Störimpulse bei Beeinflussung der Strecke.

Das Relais S hat ferner zwei Umschaltekontakte s1, s2, deren Scheitel jeweils an einem der beiden Fernspeisestrompfade liegt. Bei nicht erregtem Relais S ist der Scheitel des Umschalters S1 mit dem Minuspol der Stromquelle 11 und der Scheitel des Umschaltekontaktes s2 über die Messvorrichtung 4 und den Widerstand 32 mit dem Pluspol der Stromquelle 11 verbunden. Bei erregtem Relais S ist der Scheitel des Umschaltekontaktes s1 über den Widerstand 32 mit dem Pluspol der Stromquelle 11, der Scheitel des Umschaltkontaktes s2 mit dem Minuspol der Stromquelle 1 verbunden.

In Serie zum Widerstand 32 liegt ein Messwiderstand $R_M$ in dem Zweig des Umschaltkontaktes s1, der sich im Prüfstromkreis befindet.

An den Messwiderstand $R_M$ sind Fensterdiskriminatoren $F_1...F_n$ angeschlossen. Die Fensterdiskriminatoren $F_1...F_n$ werden ausserdem mit Referenzspannungen versorgt, die mit Hilfe eines zwischen dem Messwiderstand $R_M$ und der Referenzspannung $U_{ref}$ angeordneten Spannungsteilers erzeugt werden. Dieser Spannungsteiler ist in bezug auf die in den Querzweigen der Fernspeiseschleife vorgesehenen Widerstände $56_1...56_n$ derart bemessen, dass jeweils ein Fensterdiskriminator einem Verstärkerfeld zugeordnet ist.

Jedem Fensterdiskriminator $F_1...F_n$ ist ein eigener Optokoppler nachgeschaltt. Die Optokoppler $K_1...K_n$ liegen ausgangsseitig jeweils mit ihrem Emitter auf Bezugspotential und mit dem Kollektor über eine Leuchtdiode an der Hilfsspannung $U_{H1}$. Die in den Optokopplern $K_1...K_n$ ausgangsseitig enthaltenden Transistorstrecken dienen zugleich als Meldungsgeber für eine Überwachungseinrichtung, die an den Anschlüssen $A_1...A_n$ angeschlossen werden kann.

Das Relais S schliesst im stromlosen Zustand die Strecke mit umgekehrter Polung an und reduziert die Ausgangsspannung des Speisegerätes in bekannter Weise auf einen niedrigen Wert. Bei Inbetriebnahme des Gerätes wird mit dieser Spannung der – verpolte – Streckeneingangsstrom gemessen. Ist die Strecke in Ordnung, dann ist der Prüfstrom, der sich bei der Prüfspannung $U_P$, die an der Z-Diode 23 abfällt, ergibt, bei intakter Strecke vorwiegend durch den Kupferwiderstand der Fernspeiseschleife bestimmt. Der Prüfstrom übersteigt dann einen kritischen Wert, bei dem durch Erregung des Relais S die Strecke richtig gepolt angeschlossen und die Begrenzung der Speisespannung auf den niedrigen Prüfwert aufgehoben wird. Das Speisegerät arbeitet voll auf die Strecke.

Im Falle einer Streckenunterbrechung sinkt der Ausgangsstrom unter einen kritischen Wert, bei dem dann über das Umschalte-Relais sowohl die Speisespannung auf den niedrigen Prüfwert reduziert, als auch die Strecke umgepolt an die Prüfspannung gelegt wird.

Die Funktion des Umschalte-Relais S kann gegebenenfalls durch eine gleichwirkende Schaltung mit Halbleitern ersetzt werden.

Bei einer Streckenunterbrechung ist die Grösse des Prüfstromes nur durch die Anzahl der Querzweige $56_1...56_n$ bestimmt. Bei einer Prüfspannung $U_P$ von z.B. 40 V und mit Querzweigwiderständen $R_Q$ von z.B. je 100 kΩ würde der Messstrom je nach Anzahl der verbleibenden Felder in erster Näherung das n-fache von 1 mA betragen. Die selbsttätige Anzeige des fehlerhaften Feldes wird dadurch realisiert, dass eine der Anzahl der Verstärkerfelder gleiche Zahl von Leuchtdioden $D_1...D_n$ vorgesehen ist. Im Fehlerfall leuchtet nur die dem fehlerhaften Feld zugeordnete Diode und zeigt damit die Nummer des Verstärkerfeldes an, in dem die Unterbrechungsstelle liegt.

Nachdem im Falle einer Streckenunterbrechung der über die verbleibenden Querzweige insgesamt fliessende Prüfstrom in erster Näherung proportional mit der Länge der verbleibenden Strecke zunimmt, hat auch der am Messwiderstand $R_M$ entstehende Spannungsabfall U die gleiche Charakteristik. Dabei gilt

$$U \approx n \cdot \frac{U_P}{R_Q} \cdot R_M,$$

wobei n die Nummer des unterbrochenen Verstärkerfeldes ist.

Damit bei Unterbrechung im ersten Verstärkerfeld die Messspannung

$$1 \cdot \frac{U_P}{R_Q} \cdot R_M$$

anliegt, ist im Ausgangskreis des Fernspeisegerätes A ebenfalls ein Messwiderstand $56_0$ mit Diode $55_0$ vorgesehen.

Führt man die am Messwiderstand $R_M$ anliegende Spannung gleichzeitig an die Eingänge der verschiedenen empfindlich eingestellten Fenster-Diskriminatoren $F_1...F_n$, so wird für jedes unterbrochene Feld nur der zugehörige Fensterdiskriminator leitend gesteuert. Über die Optokoppler $K_1...K_n$, die zur hochspannungsfesten Potentialtrennung zwischen Ausgangskreis und Signalfeld dienen, wird die zugeordnete Leuchtdiode $D_1...D_n$ eingeschaltet. Auf diese Weise lässt sich auch eine Signalmeldung mit Hilfe eines Erdkontaktes für jedes unterbrochene Feld abgeben. Diese Meldungen könnten in codierter Form über eine Fernüberwachungseinrichtung weitergemeldet werden.

Bei fehlerfreier Strecke liegt der Spannungsabfall U am Messwiderstand $R_M$ über dem grössten Wert, der bei einer Unterbrechung messbar wäre, so dass kein Diskriminator anspricht. Nach Umschalten auf normalen Fernspeisebetrieb ist der Messwiderstand $R_M$ stromlos. Damit spricht ebenfalls kein Diskriminator an, da der Spannungsabfall am Messwiderstand $R_M$ mindestens

$$1 \cdot \frac{U_P}{R_Q} \cdot R_M$$

betragen müsste.

**Patentansprüche**

1. Schaltungsanordnung zur Fehlerortung in Verbindung mit einer Einrichtung zur Fernspeisung von elektrischen Verbrauchern mittels Gleichstrom-Reihenspeisung, insbesondere von Zwischenstellen in Einrichtungen der Nachrichtenübertragungstechnik, mittels einer in einer Speisestelle (A) vorgesehenen, eine Gleichstromquelle (1) enthaltenden Speisevorrichtung, wobei bei einseitiger Speisung der frei von Vorrichtungen zum selbsttätigen Schliessen der Fernspeiseschleife vor einer Unterbrechungsstelle aufgebauten Fernspeiseschleife (B) parallel zu den Verbrauchern ($53_1$, $58_1$...$53_n$, $58_n$) für den Fernspeisestrom in Sperrichtung gepolte Dioden ($54_1$...$54_n$, $57_1$...$57_n$) angeordnet sind und die Fehlerortung derart vorgenommen wird, dass der dabei in einem Prüfstromkreis fliessende Strom ($I_T$) bezogen auf den Fernspeisestrom ($I_F$) entgegengesetzt gerichtet ist und wobei den Verbrauchern Querzweige ($55_1$, $56_1$...$55_n$, $56_n$) zugeordnet sind, die nur für Ströme von der Richtung des Prüfstromes ($I_T$) leitend sind, wobei die Speisevorrichtung von einer Konstantstromquelle (11) auf eine Konstantspannungsquelle umschaltbar ist und in der Speisestelle im Prüfstromkreis in Serie zur Spannungsquelle eine Strommesseinrichtung liegt, dadurch gekennzeichnet, dass in der Speisestelle am Ausgang der Speisevorrichtung ein weiterer Querzweig mit einer Serienschaltung aus einer Diode ($55_0$) und einem Widerstand ($56_0$) vorgesehen ist, der nur für Ströme von der Richtung des Prüfstromes ($I_T$) leitend ist und dass die Strommesseinrichtung durch einen Messwiderstand ($R_M$) und eine Gruppe von an den Messwiderstand angeschlossenen Fensterdiskriminatoren ($F_1$...$F_n$) gebildet ist, derart, dass dem weiteren Querzweig und den den Verbrauchern zugeordneten Querzweigen jeweils ein Fensterdiskriminator zugeordnet ist.

2. Schaltungsanordnung nach Anspruch 1, dadurch gekennzeichnet, dass an den Fensterdiskriminator ($F_1$...$F_n$) jeweils ein Anzeigeelement ($D_1$...$D_n$) angeschlossen ist.

3. Schaltungsanordnung nach Anspruch 1 oder 2, dadurch gekennzeichnet, dass der Messwiderstand ($R_M$) in einem Stromzweig liegt, der nur bei Anschaltung der Prüfspannung in die Fernspeiseschleife stromführend ist.

4. Schaltungsanordnung nach einem der Ansprüche 1 bis 3, dadurch gekennzeichnet, dass jeweils zwischen dem Fensterdiskriminator ($F_1$...$F_n$) und dem Anzeigeelement ($D_1$...$D_n$) ein Optokoppler ($K_1$...$K_n$) angeordnet ist.

5. Schaltungsanordnung nach einem der Ansprüche 1 bis 4, dadurch gekennzeichnet, dass die Ausgänge der Optokoppler ($K_1$...$K_n$) einpolig an einem Bezugspotential ($U_{H2}$) liegen, und dass die Betriebszustände der Fensterdiskriminatoren ($F_1$...$F_n$) mittels einer Fernüberwachungseinrichtung, die den Zustand von Einbit-Meldungsquellen an eine Zentrale überträgt, unmittelbar erfassbar sind.

6. Schaltungsanordnung nach einem der Ansprüche 1 bis 5, gekennzeichnet durch eine Verwendung in Verbindung mit einem Verfahren zur ungefährlichen Inbetriebnahme der Fernspeisung, wobei zunächst ein Widerstand der Fernspeiseschleife geprüft und der Fernspeisestrom erst eingeschaltet wird, sobald in der Speisestelle ein unter einem vorgegebenen Betrag liegender Wert des Widerstandes der Fernspeiseschleife festgestellt wird.

7. Schaltungsanordnung nach einem der Ansprüche 1 bis 6, dadurch gekennzeichnet, dass die Speisestelle (A) ein durch den im Fernspeisekreis fliessenden Strom steuerbares Relais (S) enthält, das die Fernspeisestrecke im stromlosen Zustand mit der Konstantspannungsquelle verbindet.

8. Schaltungsanordnung nach einem der Ansprüche 1 bis 7, dadurch gekennzeichnet, dass die Speisestelle (A) in einem Stromzweig, der bei Anschaltung der Fernspeisestromquelle an den Fernspeisekreis stromführend ist, eine eigene Messeinrichtung zur Messung und/oder Anzeige des Fernspeisestromes enthält.

**Claims**

1. A circuit arrangement for locating faults in combination with a device for remote feeding electrical loads by means of a d.c. series feed, in particular intermediate stations in communications transmission technology equipment by means of a feed device arranged in a feed station (A) which contains a d.c. source (1), where, when the remote feed loop (B), constructed free of devices which serve to automatically close the remote feed loop prior to an interruption point, is feed on one side, diodes ($54_1$...$54_n$, $57_1$...$57_n$) poled in the blocking direction, are arranged parallel to the loads ($53_1$, $58_1$...$53_n$, $58_n$) for the remote feed current, and the faultlocating process is carried out in such manner that the current ($I_T$) which thus flows in a test circuit is oppositely-directed to the remote feed current ($I_F$) and where the loads are assigned shunt arms ($55_1$, $56_1$...$55_n$, $56_n$) which are conductive only to currents whose direction corresponds to that of the test current ($I_T$), where the feed device can be switched over from a constant current source (11) to a constant voltage source, and where a current measuring device is arranged in the feed station in the test circuit in series with the voltage source, characterised in that in the feed station, at the output of the feed device, a further shunt arm is provided with a series arrangement consisting of a diode ($55_o$) and a resistor ($56_o$), which shunt arm is conductive only to currents whose direction corresponds to that of the test current ($I_T$) and that the current measuring device is formed by a measuring resistor ($R_M$) and a group of window discriminators ($F_1...F_n$) connected to the measuring resistor, in such manner that the additional shunt arm and the shunt arms which are assigned to the loads are each allocated a window discriminator.

2. A circuit arrangement as claimed in claim 1, characterised in that a display element ($D_1...D_n$) is connected to each of the window discriminators ($F_1...F_n$).

3. A circuit arrangement as claimed in claim 1 or 2, characterised in that the measuring resistor ($R_M$) is located in a current arm which conducts current only when the test voltage is connected to the remote feed loop.

4. A circuit arrangement as claimed in one of the claims 1 to 3, characterised in that an opto-coupler ($K_1...K_n$) is in each case arranged between the window discriminator ($F_1...F_n$) and the display element ($D_1...D_n$).

5. A circuit arrangement as claimed in one of the claims 1 to 4, characterised in that the outputs of the opto-couplers ($K_1...K_n$) are connected to one pole of a reference potential ($U_{H2}$) and that the operating states of the window discriminators ($F_1...F_n$) can be immediately detected by means of a remote monitoring device which transfers the state of one-bit message sources to a central control.

6. A circuit arrangement as claimed in one of the claims 1 to 5, characterised by its use in combination with a method of safely operating the remote feed, where firstly a resistor of the remote feed loop is tested and the remote feed current is not connected until a value of the resistor of the remote feed loop falling below a predetermined amount is determined in the feed station.

7. A circuit arrangement as claimed in one of the claims 1 to 6, characterised in that the feed station (A) contains a relay (S) which can be controlled by the current flowing in the remote feed circuit and which in the currentless state connects the remote feed link to the constant voltage source.

8. A circuit arrangement as claimed in one of the claims 1 to 7, characterised in that in a current arm which conducts current when the remote feed current source is connected to the remote feed circuit, the feed station (A) contains an individual measuring device which serves to measure and/or display the remote feed current.

**Revendications**

1. Montage pour la localisation de défauts en liaison avec un dispositif pour la téléalimentation de consommateurs d'électricité par alimentation en série en courant continu, en particulier de points intermédiaires dans des dispositifs de communication, au moyen d'un dispositif d'alimentation prévu dans un point d'alimentation (A) et contenant une source de courant continue (1), dans lequel des diodes ($54_1...54_n$, $57_1...57_n$) polarisées dans le sens bloquant pour le courant de téléalimentation sont disposées parallèlement aux consommateurs ($53_1$, $58_1...53_n$, $58_n$) dans une boucle de téléalimentation (B) qui est alimentée unilatéralement et est réalisée sans dispositifs pour la fermeture automatique de la boucle en amont d'un point d'interruption, dans lequel la localisation des défauts est effectuée de manière que le courant ($I_T$) circulant alors dans un circuit d'essai soit de sens contraire au courant de téléalimentation ($I_F$), et dans lequel des branches transversales ($55_1$, $56_1...55_n$, $56_n$) qui sont seulement conductrices pour des courants ayant le sens du courant d'essai ($I_T$) sont coordonnées aux consommateurs, le dispositif d'alimentation étant commutable d'une source de courant constant (11) sur une source de tension constante et un dispositif mesureur de courant étant monté en série avec la source de tension dans le circuit d'essai au point d'alimentation, caractérisé en ce que le point d'alimentation contient, à la sortie du dispositif d'alimentation, une branche transversale supplémentaire à montage en série d'une diode ($55_o$) et d'une résistance ($56_o$), qui est seulement conductrice pour des courants ayant le sens du courant d'essai ($I_T$), et que le dispositif mesureur de courant est constitué d'une résistance de mesure ($R_M$) et d'un groupe de discriminateurs à fenêtre ($F_1...F_n$) connectés à la résistance de mesure, de manière qu'un discriminateur à fenêtre soit coordonné chaque fois à la branche transversale supplémentaire et aux branches transversales coordonnées aux consommateurs.

2. Montage selon la revendication 1, caractérisé en ce qu'un élément indicateur ($D_1...D_n$) est connecté chaque fois au discriminateur à fenêtre ($F_1...F_n$).

3. Montage selon la revendication 1 ou 2, caractérisé en ce que la résistance de mesure ($R_M$) est contenue dans une branche de circuit qui est seulement traversée d'un courant à l'application de la tension d'essai à la boucle de téléalimentation.

4. Montage selon une des revendications 1 à 3, caractérisé en ce qu'on optocoupleur ($K_1...K_n$) est disposé chaque fois entre le discriminateur à fenêtre ($F_1...F_n$) et l'élément indicateur ($D_1...D_n$).

5. Montage selon une des revendications 1 à 4, caractérisé en ce que les sorties des optocoupleurs ($K_1...K_n$) sont connectées par un pôle à un potentiel de référence ($U_{H2}$) et que les états de fonctionnement des discriminateurs à fenêtre ($F_1...F_n$) peuvent être détectés directement au moyen d'un dispositif de télésurveillance qui transmet l'état de sources de signalisation à un bit à un central.

6. Montage selon une des revendications 1 à 5, caractérisé par son utilisation en liaison avec un procédé pour la mise en service sans danger de l'alimentation à distance, selon lequel une résistance de la boucle de téléalimentation est vérifiée d'abord et selon lequel le courant de téléalimentation est seulement enclenché dès que, au point d'alimentation, il est constaté que la valeur de résistance de la boucle de téléalimentation est inférieure à une valeur préfixée.

7. Montage selon une des revendications 1 à 6, caractérisé en ce que le point d'alimentation (A) contient un relais (S) qui peut être commandé pour le courant circulant dans le circuit de téléalimentation et qui relie ce circuit, à l'état hors tension, à la source de tension constante.

8. Montage selon une des revendications 1 à 7, caractérisé en ce que le point d'alimentation (A) contient, dans une branche de circuit traversée d'un courant au branchement de la source de courant de téléalimentation au circuit de téléalimentation, un dispositif de mesure qui lui est propre pour la mesure et/ou l'indication du courant de téléalimentation.